# EUROPÄISCHE PATENTSCHRIFT

(11) **EP 0 643 627 B1**
(45) Veröffentlichungstag und Bekanntmachung des Hinweises auf die Patenterteilung: **06.03.1996**
(21) Anmeldenummer: 93912392.3
(22) Anmeldetag: 08.06.1993
(51) Int. Cl.: B02C 18/14, B01F 13/10, B29C 47/10

(54) **VORRICHTUNG ZUM PLASTIFIZIEREN VON THERMOPLASTISCHEM KUNSTSTOFFGUT**
DEVICE FOR PLASTICISING THERMOPLASTIC MATERIAL
DISPOSITIF POUR LA PLASTIFICATION D'UNE MATIERE THERMOPLASTIQUE

(30) Priorität: 12.06.1992 AT 1212/92
(43) Veröffentlichungstag der Anmeldung: 22.03.1995
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.
(86) Internationale Anmeldenummer: AT9300098
(87) Internationale Veröffentlichungsnummer: WO9325312

(56) Entgegenhaltungen:
- EP-A- 0 140 869
- EP-A- 0 174 148
- EP-A- 0 239 104
- DE-A- 2 450 936
- DE-A- 2 842 162
- DE-A- 3 430 087
- DE-B- 1 268 823
- DE-C- 917 571
- DE-U- 9 017 387

## Beschreibung

Die Erfindung bezieht sich auf eine Vorrichtung zum Plastifizieren von thermoplastischem Kunststoffgut, insbesondere von Kunststoff-Abfällen, mit einer in einem Gehäuse gelagerten Schnecke, der das zu plastifizierende Material durch eine Einbringeöffnung des Gehäuses zugeführt wird und die das Kunststoffgut zu einer im axialen Abstand von der Einbringeöffnung liegenden Austrittsöffnung für das plastifizierte Kunststoffgut fördert, wobei an die Einbringeöffnung eine Zerkleinerungseinrichtung für das Kunststoffgut angeschlossen ist, welche auf zwei parallel zueinander und vorzugsweise parallel zur Achse der Schnecke verlaufenden, gegenläufig angetriebenen Wellen angeordnete Zerkleinerungswerkzeuge aufweist, die das zerkleinerte Kunststoffgut in die Einbringeöffnung des Schneckengehäuses fördern und deren jedes mit auf das zwischen die Wellen zugeführte Kunststoffgut einwirkenden Zähnen versehen ist.

Bei einer solchen Vorrichtung besteht das Problem, das zumeist in Form von Abfällen zugeführte Kunststoffgut zu zerkleinern und dennoch wirksam der Schnecke zuzuführen, ohne den Umlauf der Zerkleinerungswerkzeuge und/bzw. oder der Schnecke zu blockieren. Die bekannten Vorschläge konnten in dieser Richtung nicht befriedigen.

Die Erfindung setzt sich zur Aufgabe, eine Vorrichtung der eingangs geschilderten Art so zu verbessern, daß das zuvor erwähnte Problem befriedigend gelöst wird, d.h., daß einerseits das zugeführte Kunstoffmaterial wirksam zerkleinert wird und daß anderseits das zerkleinerte Kunststoffmaterial sicher von der Schnecke aufgenommen und in den plastischen Zustand übergeführt und durch die Austrittsöffnung ausgebracht wird, ohne daß es zu Blockierungen der die Zerkleinerungswerkzeuge tragenden Wellen bzw. der Schnecke kommt. Die Erfindung löst diese Aufgabe dadurch, daß die Wellen mit unterschiedlichen Drehzahlen angetrieben sind, wobei die Drehrichtung der schneller laufenden Welle der Drehrichtung der Schnecke entgegengesetzt ist, daß die Zerkleinerungswerkzeuge in axialem Abstand voneinander auf der Welle angeordnet sind und die Umlaufbahnen der Zähne der Zerkleinerungswerkzeuge der beiden Wellen einander, in Achsrichtung der Wellen gesehen, überlappen und daß zumindest auf der schneller laufenden Welle zwischen einander benachbarten Zerkleinerungswerkzeugen Distanzscheiben mit kreisrundem Umfang vorgesehen sind, wobei ortsfeste Füllstücke zwischen die Zerkleinerungswerkzeuge dieser Welle eingreifen und mit ihren dem Spalt zwischen den Wellen zugewendeten Flanken tangential zum Umfang der Distanzscheiben dieser Welle verlaufen. Die unterschiedlich schnell laufenden Wellen bewirken mit den Zähnen der Zerkleinerungswerkzeuge eine wirksame Zerkleinerung des zugeführten Kunststoffgutes, zumal sich einander benachbarte Zerkleinerungswerkzeuge aneinander gleichsam reiben. Dadurch wird das zerkleinerte Kunststoffgut von den Zerkleinerungswerkzeugen auch wieder verläßlich freigegeben und nicht - wie dies bei bekannten Vorschlägen häufig der Fall war - im Kreis um die betreffende Welle herumgeführt. Hiezu trägt auch die tangential verlaufende Flanke dem Standmessers bei, welche die radial nach innen zu den Distanzscheiben gelangten Kunststoffteile gleichsam von den Distanzscheiben und auch von den im wesentlichen scheibenförmigen Zerkleinerungswerkzeugen abstreift. Hiedurch ergibt sich eine im wesentlichen tangential zur schneller laufenden Welle gerichtete Stopfkomponente auf das zerkleinerte Kunststoffgut, welche Kraftkomponente das Kunststoffgut in Richtung zur Schnecke und in die Gänge derselben zu drücken trachtet. Besonders günstige Ergebnisse werden erzielt, wenn diese Flanken auch tangential zur Wand der Einbringeöffnung verlaufen, da auf diese Weise eine kontinuierliche Erfassung des von den beiden Wellen der Schnecke zugeführten Kunststoffgutes gewährleistet wird.

Aus der EP-A-140 869 ist eine Vorrichtung zum Zerkleinern von Abfall, vor allem brennbarem Abfallmaterial, bekannt, bei welcher das zerkleinerte Material einer Schneckenpresse zur Brikettierung zugeführt wird. Zur Zerkleinerung des Abfallgutes sind auf zwei parallel zueinander und parallel zur Achse der Schnecke verlaufenden, gegenläufig angetriebenen Wellen angeordnete Zerkleinerungswerkzeuge vorhanden, die das zerkleinerte Abfallgut zur Schnecke fördern. Die Zerkleinerungswerkzeuge haben auf das zwischen ihre Wellen zugeführte Abfallgut einwirkende Zähne und sind in axialem Abstand voneinander auf den Wellen angeordnet, derart, daß die Umlaufbahnen der Zähne der beiden Wellen einander überlappen. Zwischen einander benachbarten Zerkleinerungswerkzeugen sind Distanzscheiben mit kreisrundem Umfang vorgesehen und ortsfeste Standmesser greifen zwischen die Zerkleinerungswerkzeuge der Wellen ein.

Weiters ist es bekannt (DE-A-2 450 936, DE-A-3 430 087), zwei parallel zueinander angeordnete Messerwellen einer Vorrichtung zum Zerstückeln von Sperrgut bzw. zur Zerkleinerung von Abfall gegensinnig und mit unterschiedlicher Geschwindigkeit anzutreiben.

Gemäß einer bevorzugten Ausführungsform der Erfindung sind beide Wellen mit zwischen den scheibenartigen Zerkleinerungswerkzeugen angeordneten kreisrunden Distanzscheiben versehen, zu denen die Flanken der Standmesser tangential und symmetrisch bezüglich der Mittelebene zwischen den beiden Wellen verlaufen, wobei vorzugsweise die an diese Flanken in Drehrichtung der Wellen anschließenden Umfangsteile der Standmesser dem Umfang der Distanzstücke folgend verlaufen. Dadurch werden die zuvor beschriebenen günstigen Effekte für beide Wellen der Zerkleinerungseinrichtung sichergestellt.

Ferner haben Untersuchungen gezeigt, daß es günstig ist, zwischen den beiden Wellen der Zerkleinerungseinrichtung und der Schnecke einen gewissen Freiraum zu lassen. Ein solcher Freiraum kann im Rahmen der Erfindung dadurch gebildet werden, daß die Umlaufbahn der Zahnspitzen vom Umfang der Schneckengänge in einem Abstand liegt, der das 0,5- bis 1,5-Fache des Abstandes beträgt, den die Umlaufbahn der Zahnspitzen vom Umfang der Distanzscheiben hat. Dadurch werden Blockierungen der umlaufenden Bauteile noch besser verhindert.

Um zu verhindern, daß das von der Schnecke erfaßte zerkleinerte Kunststoffmaterial mit der Drehbewegung der Schnecke mitläuft und dadurch nicht wirksam gegen die Austrittsöffnung gefördert wird, ist gemäß einer Weiterbildung der Erfindung die Anordnung so getroffen, daß zumindest im Bereich der Einbringeöffnung in der vom Umfang der Schneckengänge in Abstand liegenden Wand des Gehäuses der Schnecke Vorsprünge oder Nuten vorgesehen sind, die vorzugsweise in Axialrichtung der Schnecke verlaufen. Diese Vorsprünge bzw. Nuten wirken einem Mitlauf des Kunststoffgutes entgegen.

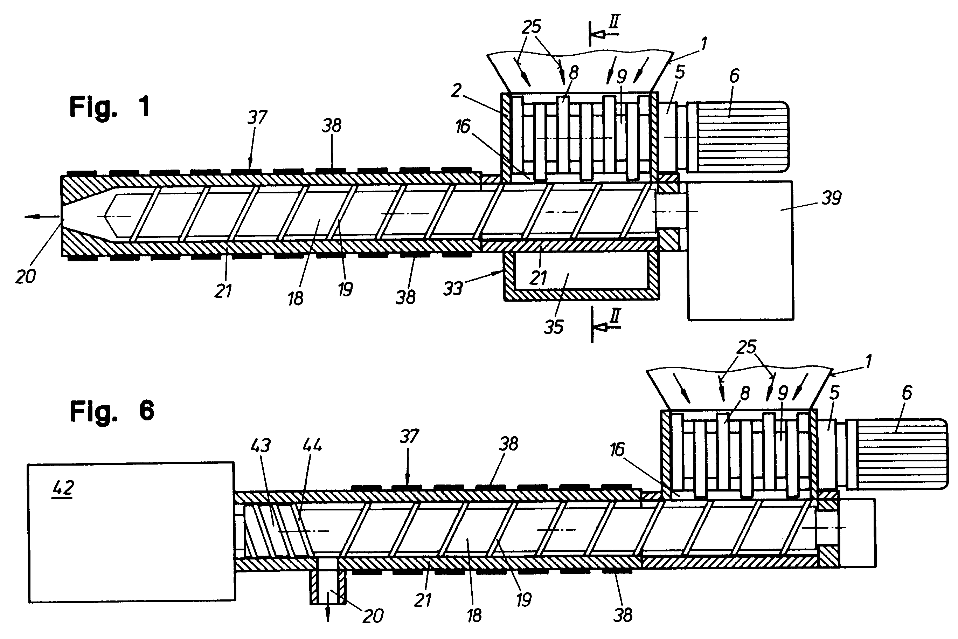

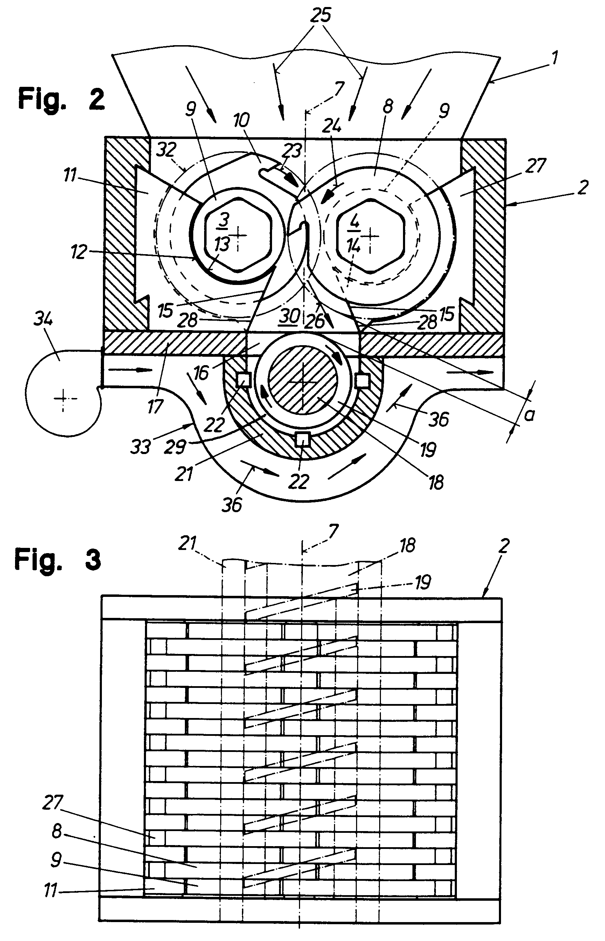

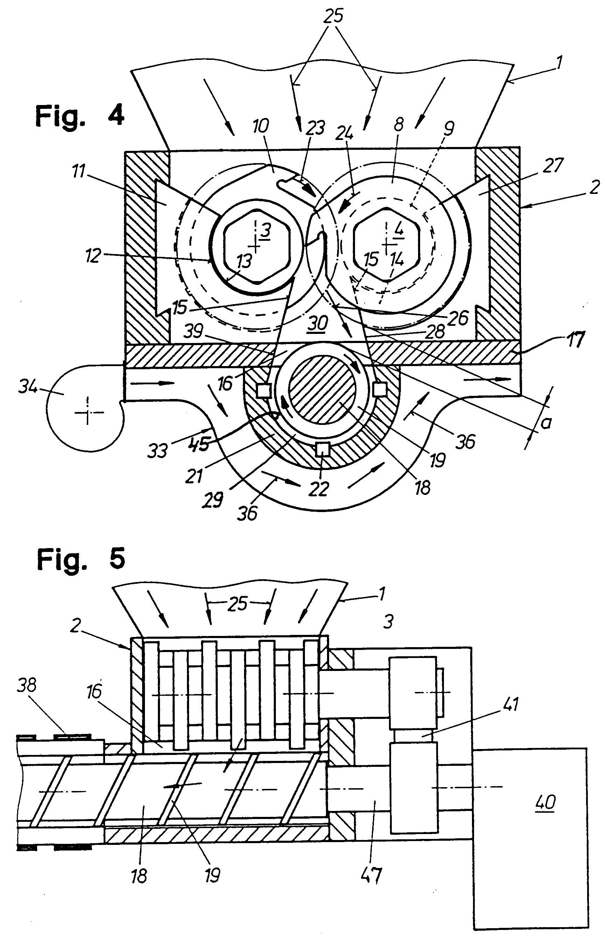

Weitere Kennzeichen und Vorteile der Erfindung ergeben sich aus der Beschreibung von Ausführungsbeispielen, welche in der Zeichnung schematisch dargestellt sind. Fig.1 zeigt einen Längsschnitt durch die Vorrichtung. Fig.2 ist ein Querschnitt entlang der Linie II-II der Fig.1, in größerem Maßstab. Fig.3 zeigt eine Variante in Draufsicht. Fig.4 zeigt eine weitere Variante im Schnitt ähnlich Fig.2. Die Fig.5 und 6 zeigen je ein weiteres Ausführungsbeispiel im Schnitt ähnlich Fig.1.

Bei der Ausführungsform nach den Fig.1 und 2 wird das zu plastifizierende thermoplastische Kunststoffmaterial, zumeist in Form von Recycling-Ware oder Abfällen, durch einen Trichter 1 in die Vorrichtung eingebracht. Der Trichter mündet in ein Gehäuse 2, in welchem zwei Wellen 3,4 um horizontale Achsen parallel zueinander drehbar gelagert sind. Die beiden Wellen 3,4 werden über ein Getriebe 5 gemeinsam von einem Motor 6 angetrieben, und zwar gegenläufig und mit unterschiedlichen Drehzahlen, derart, daß die der Mittelebene 7 (Fig.2) benachbarten Wellenteile von oben nach unten laufen. Jede Welle hat Sechskantquerschnitt und auf die beiden Wellen sind, alternierend miteinander, Zerkleinerungswerkzeuge 8 in Form von Zahnscheiben und kreisrunde Distanzscheiben 9 aufgesteckt. Die Zerkleinerungswerkzeuge 8 haben einen größeren Durchmesser als die Distanzscheiben 9 und die Anordnung ist so getroffen, daß sich die Umlaufbahnen der Zähne 10 der Zerkleinerungswerkzeuge 8, in Achsrichtung der Wellen 3,4 gesehen, überlappen. Zweckmäßig reichen die Umlaufbahnen der Zähne 10 bis nahe an den Umfang der Distanzscheiben 9 heran. Die Seitenflächen der Zerkleinerungswerkzeuge 8 und der Distanzscheiben 9 verlaufen normal zur Achsrichtung der Wellen 3,4 und diese Seitenflächen liegen aneinander an, so daß sich auf alle diese Flächen ein Abstreifeffekt auf das Kunststoffmaterial ergibt. An der der jeweils anderen Welle 3 bzw. 4 abgewendeten Seite greifen zwischen benachbarte Zerkleinerungswerkzeuge 8 ortsfeste Standmesser 11 ein, deren der jeweiligen Welle 3 bzw. 4 zugewendeter Umfangsteil 12 dem Umfang 13 der kreisförmigen Distanzscheiben 9 folgt. Dieser Umfangsteil 12 verläuft zumindest an der schneller laufenden Welle 4 bis zu einem zahnartigen Vorsprung 14, dessen Flanke 15 tangential zum Umfang 13 der zugehörigen Distanzscheibe 9 verläuft und von dort zu einer Einbringeöffnung 16 im Boden 17 des Gehäuses 2, durch welche Öffnung 16 das zerkleinerte Kunststoffmaterial zu einer Schnecke 18 gelangt, die das Material mit ihren Schneckengängen 19 erfaßt und zu einer im axialen Abstand von der Einbringeöffnung 16 liegenden Austrittsöffnung 20 (Fig.1) führt, wobei das Kunststoffmaterial plastifiziert wird. An die Öffnung 20 können an sich bekannte weitere Vorrichtungen, z.B. Filter, Extruderanlagen usw. angeschlossen sein.

Die Drehrichtung der Schnecke 18 ist entgegengesetzt der Drehrichtung der schneller laufenden Welle 4. Die Schnecke 18 bzw. ihre Gänge 19 liegen zu mindest im Bereich der Einbringeöffnung 16 im Abstand von dem Gehäuse 21 der Schnecke. In die Wand des im Bereich der Einbringeöffnung 16 liegenden Teiles dieses Gehäuses 21 sind Vorsprünge 22 eingelassen, die zweckmäßig in Axialrichtung der Schnecke 18 verlaufen. Diese Vorsprünge 22 verhindern, daß sich das von der Schnecke 18 erfaßte Kunststoffgut mit der Schnecke mitdreht. Anstelle von Vorsprüngen 22 können auch Längsnuten im Gehäuse 21 treten. Zweckmäßig schließt der Umfang der Schneckengänge 19 mit der Deckfläche des Bodens 17 bündig ab.

Die Drehrichtungen der beiden Wellen 3,4 sind mit Pfeilen 23 bzw. 24 angedeutet. Jedes Zerkleinerungswerkzeug 8 hat zweckmäßig mehrere Zähne 10, von denen in Fig.2 der Einfachheit halber nur jeweils einer dargestellt ist. Die Zähne 10 erfassen das zwischen die Wellen 3,4 im Trichter 1 in Richtung der Pfeile 25 zugeführte Kunststoffmaterial und zerreißen es, welcher Effekt durch die unterschiedlich schnell laufenden Wellen 3,4 noch gesteigert wird. Zweckmäßig liegt das Verhältnis der Drehzahlen der Wellen 3,4 bei etwa 1:2 bis 1:5. Die schneller laufende Welle 4 erteilt dem zerkleinerten Kunststoffgut eine Bewegungskomponente in Richtung des Pfeiles 26, welche eine Stopfkomponente bildet, die das Kunststoffgut in die Gänge der Schnecke 18 zu drücken trachtet. Hiebei bilden die Flanken 15 der Standmesser 11 Führungsflächen für das Kunststoffgut, so daß dieses nicht ausweichen kann, sondern in die Einbringeöffnung 16 gedrückt wird. Um auch zwischen benachbarten Standmessern 11 keine Ausweichmöglichkeit für das Kunststoffgut zu bilden, sind die Spalte zwischen benachbarten scheibenförmigen Standmessern 11 durch Füllstücke 27 ausgefüllt, die an ihren den Wellen 3 bzw. 4 zugewandten Seiten bis zum Umfang bzw. zur Umlaufbahn der Zähne 10 reichen und am Boden 17 ebenso wie die Standmesser 11 aufruhen. Die Füllstücke 27 enden bei der Einbringeöffnung 16 und haben dort Flanken 28, welche nach derselben Seite geneigt sind wie die Flanken 15 der Standmesser 11 und zweckmäßig mit den Flanken 15 der Standmesser 11 bündig abschließen.

Wie Fig.2 zeigt, liegt im Bereich der Einbringeöffnung 16 der Schnecke 18 ihr Gehäuse 21 im Abstand von dem Außenumfang der Gänge 19, so daß ein ringförmiger Freiraum 29 gebildet wird, in den die Vorsprünge 22 hineinragen. Ein weiterer Freiraum 30 ist oberhalb der Einbringeöffnung 16 dadurch gebildet, daß zwischen der Umlaufbahn der Zähne 10 der beiden Wellen 3,4 und dem Umfang der Schneckengänge 19 ein Abstand a liegt, dessen Größe in der Regel das 0,5- bis 1,5-fache des Abstandes beträgt, den die Umlaufbahn 32 der Spitzen der Zähne 10 vom Umfang 13 der Distanzscheiben 9 haben. Dieser Freiraum verhindert eine Blockierung der Wellen 3,4 bzw. der Schnecke 18.

In der Regel wird das Kunststoffgut bei seiner Zerkleinerung durch die Zerkleinerungswerkzeuge 8 erheblich erwärmt. Um eine übermäßige Erwärmung des Kunststoffgutes im Bereich der Einbringeöffnung 16 und damit eine thermische Schädigung des Kunststoffgutes oder eine Verklebung durch Plastifizierung im Schneidraum bzw. Schneckeneinzug zu vermeiden, kann im Bereich der Einbringeöffnung 16 eine Kühleinrichtung 33 vorgesehen sein, z.B. ein Kühlgebläse 34, das Kühlluft in einen das Einzugsgehäuse 21 der Schnecke 18 umgebenden Kühlkanal 35 bläst, in welchem die Kühlluft in Richtung der Pfeile 36 strömt. Um die Plastifizierung des Kunststoffmateriales sicherzustellen, können in jenem Bereich des Gehäuses 21 der Schnecke 18, welcher der Einbringeöffnung 16 folgt, Heizeinrichtungen 37 am Außenmantel des Gehäuses 21 angeordnet sein, z.B. diesen Mantel umgebende Heizbänder 38.

Die Schnecke wird durch einen an ihrem der Austrittsöffnung 20 abgewendeten Ende angeordneten Antrieb 39 angetrieben.

Zweckmäßig ist die Ausbildung der Zerkleinerungswerkzeuge 8, der Distanzscheiben 9, der Standmesser 11 und der Füllstücke 27 symmetrisch in Bezug auf die vertikale Mittelebene 7, um übersichtliche Verhältnisse zu schaffen.

In Fig.1 sind der Einfachheit halber nur wenige Zerkleinerungswerkzeuge 8 bzw. Distanzscheiben 9 eingezeichnet. Wie Fig.3 zeigt, ist in der Praxis jedoch die Anzahl der Zerkleinerungswerkzeuge 8, welche Rotormesser bilden, in der Regel relativ groß und dementsprechend auch die Anzahl der Distanzscheiben 9 bzw. der Standmesser 11 bzw. der Füllstücke 27.

Bei der Ausführungsvariante nach Fig.4 verlaufen die Flanken 15 der Standmesser 11 nicht nur tangential zum Umfang der Distanzscheiben 9, sondern auch tangential zum Umfang der Innenwand 45 des Schneckengehäuses 21 bzw. zur Wand der Einbringeöffnung 16. Dadurch wird der Einzug des von den beiden Wellen 3,4 bzw. ihren Zerkleinerungswerkzeugen 8 zerkleinerten Kunststoffmateriales in die Gänge der Schnecke 18 noch weiter begünstigt.

Bei der Ausführungsvariante nach Fig.5 ist ein gemeinsamer Antrieb 40 für die Schnecke 18 und für die beiden Wellen 3,4 vorgesehen. Hiezu ist eine Verlängerung 47 der Welle der Schnecke 18 mittels eines Zahnriementriebes 41 mit den beiden Wellen 3,4 gekoppelt. Das nötige Übersetzungsverhältnis bzw. die unterschiedlichen Drehzahlen der Wellen 3,4 können durch unterschiedliche Zähnezahlen der den Zahnriementrieb 41 bildenden Zahnräder erzielt werden. Anstelle eines Zahnriementriebes kann auch ein Kettentrieb treten.

Bei der Ausführungsvariante nach Fig.6 ist die Schnecke 18 mit einem Spitzenantrieb 42 versehen, welcher also an jenem Ende der Schnecke 18 angeordnet ist, welches der Austrittsöffnung 20 benachbart ist. In bekannter Weise ist hiebei im Anschluß an die Austrittsöffnung 20 ein Abschnitt 43 der Schneckenwelle vorgesehen, welcher Schneckengänge 44 hat, deren Steigung jener der Plastifizierschnecke 18 entgegengerichtet ist. Dieser Abschnitt 43 bildet die nötige Dichtung.

## Patentansprüche

1. Vorrichtung zum Plastifizieren von thermoplastischem Kunststoffgut, insbesondere von Kunststoff-Abfällen, mit einer in einem Gehäuse (21) gelagerten Schnecke (18), der das zu plastifizierende Material durch eine Einbringeöffnung (16) des Gehäuses (21) zugeführt wird und die das Kunststoffgut zu einer im axialen Abstand von der Einbringeöffnung (16) liegenden Austrittsöffnung (20) für das plastifizierte Kunststoffgut fördert, wobei an die Einbringeöffnung (16) eine Zerkleinerungseinrichtung für das Kunststoffgut angeschlossen ist, welche auf zwei parallel zueinander und vorzugsweise parallel zur Achse der Schnecke (18) verlaufenden, gegenläufig angetriebenen Wellen (3,4) angeordnete Zerkleinerungswerkzeuge (8) aufweist, die das zerkleinerte Kunststoffgut in die Einbringeöffnung (16) des Schneckengehäuses (21) fördern und deren jedes mit auf das zwischen die Wellen (3,4) zugeführte Kunststoffgut einwirkenden Zähnen (10) versehen ist, dadurch gekennzeichnet, daß die Wellen (3,4) mit unterschiedlichen Drehzahlen angetrieben sind, wobei die Drehrichtung der schneller laufenden Welle (4) der Drehrichtung der Schnecke (18) entgegengesetzt ist, daß die Zerkleinerungswerkzeuge (8) in axialem Abstand voneinander auf den Wellen (3,4) angeordnet sind und die Umlaufbahnen der Zähne (10) der Zerkleinerungswerkzeuge (8) der beiden Wellen (3,4) einander, in Achsrichtung der Wellen (3,4) gesehen, überlappen und daß zumindest auf der schneller laufenden Welle (4) zwischen einander benachbarten Zerkleinerungswerkzeugen (8) Distanzscheiben (9) mit kreisrundem Umfang (13) vorgesehen sind, wobei ortsfeste Standmesser (11) zwischen die Zerkleinerungswerkzeuge (8) dieser Welle (4) eingreifen und mit ihren dem Spalt zwischen den Wellen (3,4) zugewendeten Flanken (15) tangential zum Umfang (13) der Distanzscheiben (9) dieser Welle (4) verlaufen.

2. Vorrichtung nach Anspruch 1, dadurch gekennzeichnet, daß die Flanken (15) auch tangential zur Wand (39) der Einbringeöffnung (16) verlaufen.

3. Vorrichtung nach Anspruch 1 oder 2, dadurch gekennzeichnet, daß beide Wellen (3,4) mit zwischen den scheibenartigen Zerkleinerungswerkzeugen (8) angeordneten kreisrunden Distanzscheiben (9) versehen sind, zu denen die Flanken (15) der Standmesser (11) tangential und symmetrisch bezüglich der Mittelebene (7) zwischen den beiden Wellen (3,4) verlaufen, wobei vorzugsweise die an diese Flanken (15) in Drehrichtung der Wellen (3,4) anschließenden Umfangsteile der Standmesser (11) dem Umfang (13) der Distanzscheiben (9) folgend verlaufen.

4. Vorrichtung nach einem der Ansprüche 1 bis 3, dadurch gekennzeichnet, daß die Umlaufbahn der äußersten Teile der Zähne (10) vom Umfang der Schneckengänge (19) in einem Abstand (a) liegt, der das 0,5- bis 1,5-Fache des Abstandes beträgt, den die Umlaufbahn dieser Zahnteile vom Umfang der Distanzscheiben (9) hat.

5. Vorrichtung nach einem der Ansprüche 1 bis 4, dadurch gekennzeichnet, daß zwischen benachbarten Standmessern (11) Füllstücke (27) angeordnet sind.

6. Vorrichtung nach einem der Ansprüche 1 bis 5, dadurch gekennzeichnet, daß zumindest im Bereich der Einbringeöffnung (16) in der vom Umfang der Schneckengänge (19) in Abstand liegenden Wand des Gehäuses (21) der Schnecke (18) Vorsprünge (22) oder Nuten vorgesehen sind, die vorzugsweise in Axialrichtung der Schnecke (18) verlaufen.

7. Vorrichtung nach einem der Ansprüche 1 bis 6, dadurch gekennzeichnet, daß zumindest im Bereich der Einbringeöffnung (16) dem Gehäuse (21) der Schnecke (18) eine Kühleinrichtung (33), z.B. ein Kühlgebläse (34), zugeordnet ist.

8. Vorrichtung nach einem der Ansprüche 1 bis 7, dadurch gekennzeichnet, daß zumindest in jenem Bereich der Schnecke (18), welcher der Austrittsöffnung (20) benachbart ist, dem Gehäuse (21) der Schnecke (18) eine Heizeinrichtung (37), z.B. am Gehäusemantel anliegende Heizbänder (38), zugeordnet ist.

9. Vorrichtung nach einem der Ansprüche 1 bis 8, dadurch gekennzeichnet, daß die Schnecke (18) und die beiden Wellen (3,4) von einem gemeinsamen Antrieb (40) angetrieben sind (Fig.5).

## Claims

1. A device for plasticising thermoplastics material, in particular plastics waste, comprising a screw (18) mounted in a housing (21), the material to be plasticised being fed through a feed opening (16) in the housing (21) to the screw (18) which conveys the plastics material to a discharge opening (20) arranged at an axial distance from the feed opening (16) and provided for the plasticised plastics material, wherein a comminution device for the plastics material is connected to the feed opening (16) and comprises two comminuting tools (8) arranged on two shafts (3, 4) extending parallel to each other and preferably parallel to the axis of the screw (18) and driven in counterrotation, the said comminuting tools (8) conveying the comminuted plastics material into the feed opening (16) of the screw housing (21) and each being provided with teeth (10) acting on the plastics material fed between the shafts (3, 4), characterised in that the shafts (3, 4) are driven at different speeds, the direction of rotation of the faster rotating shaft (4) being contrary to the direction of rotation of the screw (18), in that the comminuting tools (8) are arranged on the shafts (3, 4) at an axial distance apart and the circular paths of the teeth (10) of the comminuting tools (8) of the two shafts (3, 4) overlap, viewed in the axial direction of the shafts (3, 4), and in that spacers (9) having a circular circumference (13) are provided between adjacent comminuting tools (8) at least on the faster rotating shaft (4), fixed blades (11) engaging between the comminuting tools (8) of this shaft (4) and the edges (15) of the fixed blades (11) extending tangentially to the circumference (13) of the spacers (9) on this shaft (4), the said edges (15) facing the gap between the shafts (3, 4).

2. A device according to claim 1, characterised in that the edges (15) also extend tangentially to the wall (39) of the feed opening (16).

3. A device according to claim 1 or 2, characterised in that both shafts (3, 4) are provided with circular spacers (9) arranged between the disc-type comminuting tools (8), the edges (15) of the fixed blades (11) extending tangentially and symmetrically in relation to the said spacers (9) relative to the central plane (7) between the two shafts (3, 4), the circular parts of the fixed blades (11), adjoining these edges (15) in the direction of rotation of the shafts (3, 4), preferably extending following the circumference (13) of the spacers (9).

4. A device according to one of claims 1 to 3, characterised in that the circular path of the outermost parts of the teeth (10) is at a distance (a) from the circumference of the screw flights (19) which is 0.5 to 1.5 times the distance between the circular path of these teeth parts and the circumference of the spacers (9).

5. A device according to one of claims 1 to 4, characterised in that filler pieces (27) are arranged between adjacent fixed blades (11).

6. A device according to one of claims 1 to 5, characterised in that projections (22) or grooves are provided in the wall of the housing (21) of the screw (18) at least in the region of the feed opening (16) and preferably extend in the axial direction of the screw (18), the said wall being at a distance from the circumference of the screw flights (19).

7. A device according to one of claims 1 to 6, characterised in that a cooling device (33), e.g. a cooling fan (34), is associated with the housing (21) of the screw (18) at least in the region of the feed opening (16).

8. A device according to one of claims 1 to 7, characterised in that a heating device (37), e.g. heating bands (38) lying against the housing jacket, is associated with the housing (21) of the screw (18) at least in that region of the screw (18) adjacent to the discharge opening (20).

9. A device according to one of claims 1 to 8, characterised in that the screw (18) and the two shafts (3, 4) are driven by a common drive (40) (Fig.5).

## Revendications

1. Dispositif pour la plastification d'une matière thermoplastique, en particulier de déchets en matière plastique, comprenant une vis sans fin (18) montée dans un logement (21), à laquelle les matériaux à plastifier sont amenés par un orifice de chargement (16) du logement (21) et qui entraîne la matière plastique vers un orifice de sortie (20) de la matière plastifiée, axialement distant de l'orifice de chargement (16), un dispositif de broyage de matière plastique étant raccordé à l'orifice de chargement (16) et doté d'outils de broyage (8), disposés sur deux arbres (3, 4), parallèles entre eux et de préférence parallèles à l'arbre de la vis (18) et, entraînés chacun dans des sens de rotation opposés, lesdits outils de broyage entraînant la matière plastique broyée dans l'orifice de chargement (16) ménagé dans le logement (21) de la vis et étant chacun dotés de dents (10) qui agissent sur la matière plastique admise entre les arbres (3, 4), caractérisé en ce que les arbres (3, 4) sont entraînés à des vitesses de rotation différentes, le sens de rotation de l'arbre le plus rapide (4) étant opposé au sens de rotation de la vis (18), en ce que les outils de broyage (8) sont disposés axialement distants les uns des autres sur les arbres (3, 4), les orbites des dents (10) des outils de broyage (8) des deux arbres (3, 4) se recoupant les unes les autres, vues dans la direction de l'axe des arbres (3, 4), et en ce que des cales d'épaisseur (9) de périphérie circulaire (13) sont prévues au moins sur l'arbre le plus rapide (4), entre deux outils de broyage (8) voisins, des couteaux verticaux (11) fixes s'engageant entre les outils de broyage (8) dudit arbre (4), les flancs (15) desdits couteaux verticaux, orientés vers l'espace entre les arbres (3, 4), étant tangentiels à la périphérie (13) des cales d'épaisseur (9) dudit arbre (4).

2. Dispositif selon la revendication 1, caractérisé en ce que les flancs (15) sont également tangentiels à la paroi (39) de l'orifice de chargement (16).

3. Dispositif selon la revendication 1 ou 2, caractérisé en ce que les deux arbres (3, 4) sont dotés de cales d'épaisseur (9) circulaires, disposées entre les outils de broyage (8) en forme de disque, les flancs (15) des couteaux verticaux (11) étant tangentiels auxdites cales d'épaisseur et disposés symétriquement par rapport au plan médian (7) passant entre les deux arbres (3, 4), la portion de la périphérie des couteaux verticaux (11) qui prolonge lesdits flancs (15), dans le sens de rotation des arbres (3, 4), suivant de préférence la périphérie (13) des cales d'épaisseur (9).

4. Dispositif selon l'une quelconque des revendications 1 à 3, caractérisé en ce que l'orbite de la partie la plus externe des dents (10) passe à une distance (a) de la périphérie du filetage (19) de la vis, égale à 0,5 à 1,5 fois la distance qui sépare l'orbite de ladite partie des dents de la périphérie des cales d'épaisseur (9).

5. Dispositif selon l'une quelconque des revendications 1 à 4, caractérisé en ce que des pièces intercalaires (27) sont insérées entre deux couteaux verticaux (11) voisins.

6. Dispositif selon l'une quelconque des revendications 1 à 5, caractérisé en ce que des parties en saillie (22) ou des rainures, orientées de préférence dans la direction axiale de la vis (18), sont prévues au moins au niveau de l'orifice de chargement (16), dans la paroi du logement (21) de la vis (18) qui est située à distance de la périphérie du filetage (19) de la vis.

7. Dispositif selon l'une quelconque des revendications 1 à 6, caractérisé en ce qu'un dispositif de refroidissement (33), par exemple une soufflerie de refroidissement (34), est prévu au moins au niveau de l'orifice de chargement (16) ménagé dans le logement (21) de la vis (18).

8. Dispositif selon l'une quelconque des revendications 1 à 7, caractérisé en ce qu'un dispositif de chauffage (37), par exemple des rubans chauffants (38) placés contre l'enveloppe du logement, est associé au logement (21) de la vis (18), au moins dans la région de la vis (18) située au voisinage de l'orifice de sortie (20).

9. Dispositif selon l'une quelconque des revendications 1 à 8, caractérisé en ce que la vis (18) et les deux arbres (3, 4) sont entraînés par un dispositif d'entraînement (40) commun.
